# DEMANDE DE BREVET EUROPEEN

(11) **EP 4 734 309 A1**
(43) Date de publication de la demande: **29.04.2026**
(21) Numéro de dépôt: 25208489.2
(22) Date de dépôt: 14.10.2025
(51) Int. Cl.: H02H 7/26, H02B 13/00, H02J 13/13, H02J 13/333

(54) **TABLEAU DE DISTRIBUTION ÉLECTRIQUE DE MOYENNE TENSION**

(30) Priorité: 22.10.2024 FR 2411532
(71) Demandeur: SCHNEIDER ELECTRIC INDUSTRIES SAS, 92500 Rueil-Malmaison (FR)
(72) Inventeur: BRUN, Philippe, 38190 BERNIN (FR); FERRARO, Venanzio, 38000 GRENOBLE (FR)
(74) Mandataire: Plasseraud IP

(57) **Abrégé**

Il est proposé un tableau de distribution électrique (100) de moyenne tension, comprenant :
- un ensemble de cellules (10-A, 10B),
- une unité centrale (1) connectée à deux bus de communication (B1,B2) et configurée pour émettre une requête de coupure du courant,

chaque cellule (10-A,10-B) comportant respectivement :
- un premier capteur (5-A,5-B) configuré pour mesurer un premier paramètre physique représentatif du courant électrique,
- une unité d'interface (2-A,2-B) connectée au premier bus (B1), configurée pour émettre vers l'unité centrale (1) le signal du premier capteur (5-A,5-B),
- un deuxième capteur (6-A,6-B) configuré pour mesurer un deuxième paramètre physique représentatif de conditions de fonctionnement de la cellule (10-A,10-B),
- une unité d'acquisition (3-A,3-B) connectée au deuxième bus (B2), configurée pour émettre vers l'unité centrale (1) le signal du deuxième capteur (6-A,6-B),

l'unité d'interface (2-A,2-B) étant configurée pour couper le courant de la cellule (10-A, 10B) sur réception de la requête de coupure.

## Description

### Domaine technique

La présente invention se rapporte au domaine des systèmes de distribution électrique de moyenne tension, c'est-à-dire dont la tension nominale de fonctionnement est comprise entre 1 kV et 52 kV. Ces systèmes de distribution sont intégrés à un réseau de distribution électrique de type moyenne tension.

### Technique antérieure

Un système de distribution électrique de moyenne tension comprend un ensemble de branches interconnectées par un tableau de distribution électrique. Un tel tableau de distribution électrique comprend ainsi un ensemble de cellules électriques, chaque cellule permettant d'alimenter au moins une des branches. L'agencement d'un ensemble de cellules permet de configurer le réseau électrique en fonction des besoins.

Chaque cellule est équipée notamment d'un disjoncteur, afin de pouvoir couper le courant dans cette cellule en cas de défaut de fonctionnement, par exemple en cas de court-circuit entre une phase et la terre. Chaque cellule comprend ainsi différents capteurs permettant de mesurer diverses grandeurs physiques caractéristiques du fonctionnement de la cellule, et d'une unité de traitement des informations mesurées. L'analyse des informations mesurées permet de diagnostiquer un défaut dans la branche surveillée, et de déclencher une coupure du courant dans la branche surveillée en cas de défaut détecté.
Généralement, chaque cellule est équipée de capteurs spécifiques et d'une unité de traitement spécifique à la partie de réseau électrique alimentée par cette cellule. Chaque cellule est ainsi spécifique à l'usage prévu à l'origine.

Par conséquent, la conception d'un tableau de distribution électrique nécessite une étude complexe, et une réalisation de ce tableau est également complexe.
Il existe ainsi un besoin de disposer d'une solution de tableau de distribution électrique pouvant utiliser des éléments standardisés, pour lesquels l'effort de conception et d'installation est réduit.

### Résumé

A cette fin, l'invention propose un tableau de distribution électrique de moyenne tension, comprenant :
- un ensemble de cellules électriques, chaque cellule électrique étant configurée pour fournir un courant électrique,
- un premier bus de communication,
- un deuxième bus de communication distinct du premier bus de communication,
- une unité centrale connectée au premier bus de communication et au deuxième bus de communication,

chaque cellule électrique comportant respectivement :
   - un dispositif de coupure apte à interrompre le courant électrique fourni par la cellule électrique,
   - un premier ensemble de capteurs, chaque capteur du premier ensemble de capteurs étant configuré pour mesurer une première catégorie de paramètres physiques représentatifs d'une énergie électrique fournie par la cellule,
   - une unité d'interface connectée au premier bus de communication, l'unité d'interface étant configurée pour émettre vers l'unité centrale un signal de mesure de chaque capteur du premier ensemble de capteurs,
   - un deuxième ensemble de capteurs, chaque capteur du deuxième ensemble de capteurs étant configuré pour mesurer une deuxième catégorie de paramètres physiques représentatifs de conditions de fonctionnement de la cellule,
   - une unité d'acquisition connectée au deuxième bus de communication, l'unité d'acquisition étant configurée pour émettre vers l'unité centrale un signal de mesure de chaque capteur du deuxième ensemble de capteurs,
dans lequel l'unité centrale est configurée pour émettre une requête de coupure du courant électrique vers une cellule de l'ensemble de cellules électriques à partir d'au moins un signal parmi les signaux émis par l'unité d'interface de ladite cellule,
dans lequel l'unité d'interface de chaque cellule est configurée pour commander respectivement le dispositif de coupure de ladite cellule sur réception de la requête de coupure du courant électrique émise par l'unité centrale,
et dans lequel l'unité centrale est configurée pour évaluer un état opérationnel du tableau de distribution électrique à partir d'au moins un signal parmi les signaux de mesure respectivement émis par chaque unité d'acquisition.

L'architecture proposée permet de construire un tableau de distribution électrique à partir d'éléments standardisés et facilement configurables. L'utilisation de deux bus de communication séparés permet de garantir l'exécution des fonctions critiques, comme la coupure du courant en cas de défaut.

Les caractéristiques listées dans les paragraphes suivant peuvent être mises en œuvre indépendamment les unes des autres ou selon toutes les combinaisons techniquement possibles :
Le tableau de distribution électrique forme un système de distribution électrique de moyenne tension.

Selon un aspect du tableau de distribution électrique, le premier bus de communication est un bus dédié à la communication entre l'unité centrale et chaque unité d'interface de l'ensemble de cellules électriques.

Le fonctionnement du premier bus de communication est indépendant du fonctionnement du deuxième bus. Le fonctionnement du premier bus de communication, dédié aux fonctions critiques, est ainsi sécurisé.

Le premier bus de communication est configuré pour établir une communication uniquement entre l'unité centrale et chaque unité d'interface de l'ensemble de cellules électriques.

Le premier bus de communication relie entre eux un premier ensemble d'éléments, le premier ensemble d'éléments consistant en l'unité centrale et chaque unité d'interface de l'ensemble de cellules électriques.

Le premier bus de communication est un bus filaire.

Le premier bus de communication a une topologie en anneau.

Cette configuration de boucle, pouvant aussi être désignée par le terme anneau, permet d'assurer un maintien du fonctionnement même si un segment de la boucle venait à être interrompu.

Chaque signal de mesure émis par chaque unité d'interface vers l'unité centrale est un signal numérique.

Selon un autre aspect du tableau de distribution électrique proposé, le deuxième bus de communication relie un deuxième ensemble d'éléments, le deuxième ensemble d'éléments comprenant l'unité centrale et chaque unité d'acquisition de l'ensemble de cellules électriques.

Le deuxième bus de communication relie l'unité centrale et chaque unité d'acquisition de l'ensemble de cellules électriques. Le deuxième bus de communication peut également relier d'autres éléments.

Le deuxième bus de communication est configuré pour établir une communication notamment entre l'unité centrale et chaque unité d'acquisition de l'ensemble de cellules électriques.

Le signal de mesure émis par chaque unité d'acquisition vers l'unité centrale est un signal numérique.

Selon un mode de réalisation du tableau de distribution électrique, chaque cellule comprend respectivement un conducteur électrique correspondant à une phase d'un réseau électrique de moyenne tension, et le premier ensemble de capteurs de chaque cellule électrique comprend au moins un capteur parmi un capteur de courant et un capteur de tension.

Le capteur de courant est configuré pour déterminer l'intensité du courant électrique circulant dans le conducteur électrique.

Le capteur de tension est configuré pour déterminer la tension électrique du conducteur électrique.

La surveillance de l'intensité du courant circulant dans le conducteur électrique, ou de la tension, permet de déterminer une anomalie de fonctionnement de la partie de réseau électrique alimentée par la cellule.

Selon un exemple de réalisation, le premier ensemble de capteurs de chaque cellule électrique comprend un capteur de courant et un capteur de tension.

Selon un exemple de réalisation du tableau de distribution électrique, chaque cellule comprend respectivement trois conducteurs électriques correspondant respectivement à chacune des phases d'un réseau électrique de moyenne tension, et le premier ensemble de capteurs de chaque cellule électrique comprend au moins un capteur parmi un capteur d'intensité du courant électrique et un capteur de tension électrique pour chaque phase.

Selon un mode de réalisation, le deuxième ensemble de capteurs comprend au moins un capteur parmi un capteur de température, un capteur de pression, un capteur d'humidité, un capteur de décharge partielle.

Plus généralement, le deuxième ensemble de capteurs d'une cellule comprend tout capteur permettant d'évaluer l'état opérationnel de la cellule correspondante.

Ces signaux permettent de vérifier que les conditions environnementales dans lesquelles la cellule électrique opère restent dans des limites acceptables. Ils permettent aussi de vérifier l'état opérationnel de la cellule, c'est-à-dire de vérifier que les équipements ou composants de la cellule ne sont pas dégradés.

Chaque capteur du deuxième ensemble de capteurs peut être respectivement disposé à l'intérieur d'une cellule.

Chaque capteur du deuxième ensemble de capteurs est par exemple fixé à un bâti de la cellule.

Le premier bus de communication est configuré pour utiliser un premier protocole de communication numérique.

Le premier protocole de communication numérique est par exemple le protocole IEC 61850.

Ce protocole permet la transmission des signaux échantillonnés avec des performances suffisantes pour assurer les fonctions de protection.

Le deuxième bus de communication est configuré pour utiliser un deuxième protocole de communication numérique.

Le deuxième protocole de communication numérique peut être distinct du premier protocole de communication numérique.

Le deuxième protocole de communication numérique est par exemple le protocole Modbus.

D'autres protocoles industriels peuvent aussi être utilisés, notamment les protocoles CAN, CANopen, J1939, LIN, EtherCAT, Ethernet/IP, Profinet.

Le deuxième bus de communication est un bus filaire.

Le deuxième bus de communication a une topologie en bus.

Selon un mode de réalisation du tableau de distribution électrique, l'unité d'interface de chaque cellule électrique est configurée pour échantillonner un signal électrique analogique fourni par chaque capteur du premier ensemble de capteurs, et pour transmettre les valeurs échantillonnées à l'unité centrale par le premier bus de communication.

Dans le cas où les capteurs utilisés sont des capteurs analogiques, l'unité d'interface réalise l'acquisition du signal analogique et la conversion analogique/numérique du signal préalablement acquis.

Selon un exemple de réalisation du tableau de distribution électrique, l'échantillonnage est réalisé de manière synchrone entre les unités d'interface de l'ensemble de cellules électriques.

Des algorithmes de surveillance basés sur la comparaison des signaux de différentes cellules peuvent ainsi être mis en œuvre.

Les unités d'interface sont ainsi configurées pour échantillonner de façon synchrone les signaux électriques analogiques fournis par les capteurs du premier ensemble de capteurs.

Les unités d'interface sont configurées pour échantillonner les signaux électriques analogiques fournis par les capteurs du premier ensemble de capteurs à une première fréquence prédéterminée.

La première fréquence prédéterminée vaut par exemple 4,8 kHz.

Selon un mode de réalisation du tableau de distribution électrique, l'unité d'acquisition de chaque cellule électrique est configurée pour échantillonner un signal électrique analogique fourni par chaque capteur du deuxième ensemble de capteurs, et pour transmettre les valeurs échantillonnées à l'unité centrale par le deuxième bus de communication.

Selon un mode de réalisation, l'échantillonnage est réalisé de manière synchrone entre les unités d'acquisition de l'ensemble de cellules électriques.

Les unités d'acquisition sont configurées pour échantillonner de façon synchrone les signaux électriques analogiques fournis par les capteurs du deuxième ensemble de capteurs.

Selon un mode de réalisation, les unités d'acquisition sont configurées pour échantillonner les signaux électriques analogiques fournis par les capteurs du deuxième ensemble de capteurs à une deuxième fréquence prédéterminée.

La deuxième fréquence prédéterminée est choisie en fonction de la dynamique du paramètre physique observé. On entend par dynamique la vitesse de variation maximale du phénomène physique observée.

Selon un mode de réalisation, l'unité centrale est configurée pour :
- analyser au moins un signal parmi les signaux émis par l'unité d'interface d'une cellule,
- détecter une anomalie du courant électrique fourni par ladite cellule à partir du au moins un signal analysé.

Par exemple, l'unité centrale est configurée pour :
- analyser le signal émis par l'unité d'acquisition d'une cellule,
- évaluer un état opérationnel de ladite cellule à partir de chacun des signaux analysés.

Selon un aspect du tableau de distribution électrique, l'unité centrale est configurée pour :
- détecter une anomalie de fonctionnement correspondant à un court-circuit dans une cellule de l'ensemble de cellules électriques,
- émettre une requête de coupure du courant électrique vers la cellule pour laquelle une anomalie de fonctionnement correspondant à un court-circuit est détectée.

L'unité centrale déclenche la coupure du courant dans une cellule lorsqu'un évènement critique, comme un court-circuit, est détecté pour la cellule concernée.

Selon un autre aspect du tableau de distribution électrique, l'unité centrale est configurée pour :
- détecter une anomalie de fonctionnement correspondant à une surchauffe d'une cellule de l'ensemble de cellules électriques,
- émettre un signal d'alerte indiquant la cellule pour laquelle une anomalie de fonctionnement correspondant à une surchauffe est détectée.

Dans le cas d'un évènement non-critique, un signal d'alerte est émis, sans interrompre le fonctionnement de la cellule concernée. L'opérateur du réseau électrique peut ainsi analyser le fonctionnement du système et prendre les mesures correctives adéquates.

Le premier ensemble de capteurs d'une cellule de l'ensemble de cellules est identique au premier ensemble de capteurs des autres cellules de l'ensemble de cellules.

L'équipement des cellules peut ainsi être au moins partiellement standardisé.

Le deuxième ensemble de capteurs d'une cellule de l'ensemble de cellules est identique au deuxième ensemble de capteurs des autres cellules de l'ensemble de cellules.

Comme précédemment, l'équipement des cellules peut ainsi être au moins partiellement standardisé.

L'unité d'interface d'une cellule de l'ensemble de cellules est identique à l'unité d'interface des autres cellules de l'ensemble de cellules.

Les unités d'interface de l'ensemble de cellules électriques sont identiques.

L'unité d'acquisition d'une cellule de l'ensemble de cellules est identique à l'unité d'acquisition des autres cellules de l'ensemble de cellules.

Les unités d'acquisition de l'ensemble de cellules électriques sont identiques.

Comme précédemment, l'équipement des cellules peut ainsi être au moins partiellement standardisé.

Selon un exemple de réalisation du tableau de distribution électrique, toutes les cellules de l'ensemble de cellules électriques sont identiques.

On entend que toutes les cellules sont matériellement identiques. Le tableau de distribution électrique peut ainsi être réalisé à partir de cellules entièrement standardisées. La mise en œuvre et la modification d'un réseau électrique est ainsi facilitée.

### Brève description des dessins

D'autres caractéristiques, détails et avantages apparaîtront à la lecture de la description détaillée ci-après, et à l'analyse des dessins annexés, sur lesquels :
La figure 1 est une représentation schématique d'un tableau de distribution électrique de moyenne tension selon l'invention,
La figure 2 est une représentation schématique d'une cellule électrique du tableau de distribution électrique de la figure 1.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations. Quand il est précisé qu'un dispositif comporte un élément donné, cela n'exclut pas la présence d'autres éléments dans ce dispositif.

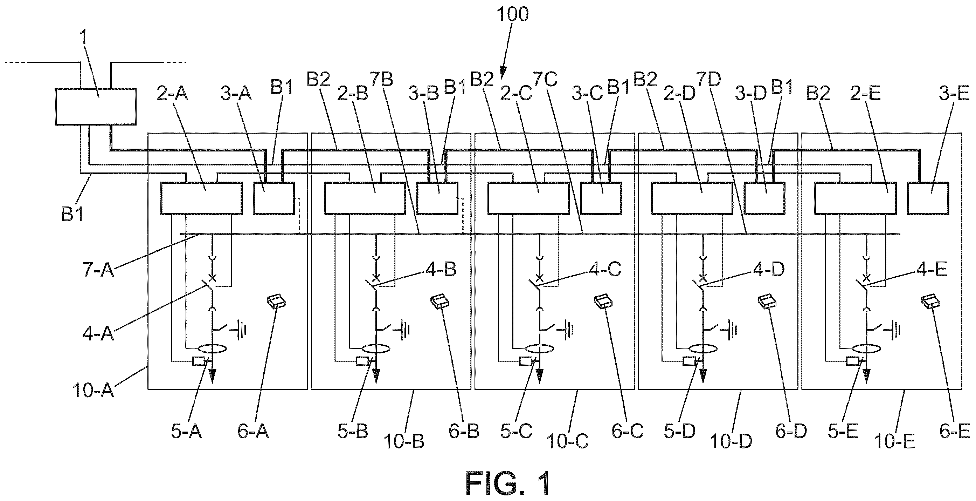

On a représenté sur la figure 1 un tableau de distribution électrique 100 de moyenne tension.
Le tableau de distribution électrique 100 comprend un ensemble de cellules électriques. Dans la description qui suit, les termes 'cellule' et 'cellule électrique' sont équivalents.
Sur l'exemple illustré, le tableau de distribution électrique 100 comprend cinq cellules électriques, désignées par les signes 10-A,10-B,10-C,10-D,10-E.
Le nombre de cellules représentées a été choisi arbitrairement et le tableau de distribution électrique 100 peut comporter un nombre quelconque de cellules.
Afin de simplifier les références employées dans la description détaillée, on mentionnera seulement les trois premières cellules 10-A,10-B,10-C ainsi que les équipements correspondant.

Le tableau de distribution électrique 100 de moyenne tension proposé ici comprend :
- un ensemble de cellules électriques 10-A,10-B,10-C, chaque cellule électrique 10-A, 10-B, 10-C étant configurée pour fournir un courant électrique,
- un premier bus de communication B1,
- un deuxième bus de communication B2 distinct du premier bus de communication B1,
- une unité centrale 1 connectée au premier bus de communication B1 et au deuxième bus de communication B2.
Chaque cellule électrique 10-A,10-B,10-C comporte respectivement :
- un dispositif de coupure 4-A,4-B,4-C apte à interrompre le courant électrique fourni par la cellule électrique 10-A,10-B,10-C,
- un premier ensemble de capteurs 5-A,5-B,5-C, chaque capteur du premier ensemble de capteurs 5-A,5-B,5-C étant configuré pour mesurer une première catégorie de paramètres physiques représentatifs d'une énergie électrique fournie par la cellule 10-A,10-B,10-C,
- une unité d'interface 2-A,2-B,2-C connectée au premier bus de communication B1, l'unité d'interface 2-A,2-B,2-C étant configurée pour émettre vers l'unité centrale 1 un signal de mesure de chaque capteur du premier ensemble de capteurs 5-A,5-B,5-C,
- un deuxième ensemble de capteurs 6-A,6-B,6-C, chaque capteur du deuxième ensemble de capteurs 6-A,6-B,6-C étant configuré pour mesurer une deuxième catégorie de paramètres physiques représentatifs de conditions de fonctionnement de la cellule 10-A,10-B,10-C,
- une unité d'acquisition 3-A,3-B,3-C connectée au deuxième bus de communication B2, l'unité d'acquisition 3-A,3-B,3-C étant configurée pour émettre vers l'unité centrale 1 un signal de mesure de chaque capteur du deuxième ensemble de capteurs 6-A,6-B,6-C.
L'unité centrale 1 est configurée pour émettre une requête de coupure du courant électrique vers une cellule de l'ensemble de cellules électriques 10-A,10B,10-C à partir d'au moins un signal parmi les signaux émis par l'unité d'interface 2-A,2-B,2-C de ladite cellule 10-A,10-B,10-C.
L'unité d'interface 2-A,2-B,2-C de chaque cellule 10-A,10-B,10-C est configurée pour commander respectivement le dispositif de coupure 4-A,4-B,4-C de ladite cellule 10-A,10-B,10-C sur réception de la requête de coupure du courant électrique émise par l'unité centrale 1.
L'unité centrale 1 est configurée pour évaluer un état opérationnel du tableau de distribution électrique 100 à partir d'au moins un signal parmi les signaux de mesure respectivement émis par chaque unité d'acquisition 3-A,3-B,3-C.

L'architecture proposée permet de construire un tableau de distribution électrique 100 à partir d'éléments standardisés et facilement configurables. Les différentes cellules forment les éléments standardisés. L'utilisation de deux bus de communication séparés permet de garantir l'exécution des fonctions critiques, comme la coupure du courant en cas de défaut.

Le tableau de distribution électrique 100 proposé forme un système de distribution électrique de moyenne tension.
Le tableau de distribution permet d'alimenter différentes branches d'un réseau électrique de moyenne tension.

Le premier ensemble de capteurs d'une cellule a pour rôle de mesurer les paramètres physiques, ou grandeurs physiques, permettant de surveiller l'énergie électrique fournie par cette cellule. Cette première catégorie de paramètres physiques sont les paramètres intervenant dans la détection des défauts critiques dans la fourniture d'énergie électrique, comme un court-circuit dans une branche de réseau alimenté par cette cellule.
La première catégorie de paramètres physiques est ainsi à la base de la détection des défauts critiques dans la fourniture d'énergie électrique.
Le deuxième ensemble de capteurs d'une cellule a pour rôle de mesurer les paramètres physiques, ou grandeurs physiques, permettant de surveiller les conditions dans lesquelles cette cellule opère. Cette deuxième catégorie de paramètres physiques sont les paramètres dans la surveillance du fonctionnement de la cellule, hors des défauts critiques demandant une action de correction quasiimmédiate.
La deuxième catégorie de paramètres physiques permet notamment de réaliser une surveillance à moyen terme ou à long terme du fonctionnement de la cellule.

Le premier bus de communication B1 est un bus dédié à la communication entre l'unité centrale 1 et chaque unité d'interface 2-A,2-B,2-C de l'ensemble de cellules électriques 10-A,10-B,10-C.

Le fonctionnement du premier bus de communication B1 est ainsi indépendant du fonctionnement du deuxième bus B2. Le fonctionnement du premier bus de communication B1, dédié aux fonctions critiques, est ainsi sécurisé. La coupure du courant en cas de court-circuit dans une cellule est un exemple de fonction critique.

Le premier bus de communication B1 est ainsi configuré pour établir une communication uniquement entre l'unité centrale 1 et chaque unité d'interface 2-A,2-B,2-C de l'ensemble de cellules électriques 10-A,10-B,10-C.
En d'autres termes, le premier bus de communication B1 est fermé sur le milieu extérieur.
Le premier bus de communication B1 relie seulement l'unité centrale 1 et chaque unité d'interface 2-A,2-B,2-C de l'ensemble de cellules électriques 10-A,10-B,10-C.

En d'autres termes, le premier bus de communication B1 relie entre eux un premier ensemble d'éléments, le premier ensemble d'éléments consistant en l'unité centrale 1 et chaque unité d'interface 2-A,2-B,2-C de l'ensemble de cellules électriques 10-A,10-B,10-C.

Le premier bus de communication B1 est un bus filaire.

Le premier bus de communication B1 a une topologie en anneau.
En d'autres termes, le premier bus de communication B1 a une structure de boucle. Cette configuration de boucle permet d'assurer un maintien du fonctionnement même si un segment de la boucle venait à être interrompu.

Le premier bus de communication B1 relie l'unité centrale 1 à l'unité d'interface 2-A de la première cellule 10-A. Le premier bus de communication B1 relie l'unité centrale 1 à l'unité d'interface de la dernière cellule.
Pour un ensemble de cellules comprenant N cellules, l'unité d'interface d'une cellule de rang k donné compris entre 2 et N-1 est connectée, ou reliée, à l'unité d'interface de la cellule de rang immédiatement inférieur k-1, ainsi qu'à l'unité d'acquisition de la cellule de rang immédiatement supérieur k+1.
Par exemple, dans un tableau de distribution électrique possédant exactement cinq cellules, comme sur l'exemple de la figure 1, l'unité centrale 1 est connectée à l'unité d'interface 2-A de la première cellule 10-A et à l'unité d'interface 2-E de la cinquième et dernière cellule 10-E.
L'unité d'interface 2-B de la deuxième cellule 10-B est ainsi reliée à l'unité d'interface 2-A de la première cellule 10-A, ainsi qu'à l'unité d'interface 2-C de la troisième cellule 10-C.
De la deuxième cellule 10-B à l'avant dernière cellule 10-D, chaque unité d'interface est connectée à l'unité d'interface de la cellule de rang immédiatement inférieur, c'est-à-dire l'unité d'interface de la cellule précédente, ainsi qu'à l'unité d'interface de la cellule de rang immédiatement supérieur, c'est-à-dire l'unité d'interface de la cellule suivante.

Chaque signal de mesure émis par chaque unité d'interface 2-A,2-B,2-C vers l'unité centrale 1 est un signal numérique.

Le deuxième bus de communication B2 relie un deuxième ensemble d'éléments, le deuxième ensemble d'éléments comprenant l'unité centrale 1 et chaque unité d'acquisition 3-A,3-B,3-C de l'ensemble de cellules électriques 10-A,10-B,10-C.

Le deuxième bus de communication B2 relie ainsi l'unité centrale 1 et chaque unité d'acquisition 3-A,3-B,3-C de l'ensemble de cellules électriques 10-A,10-B,10-C.
Le deuxième bus de communication B2 peut également relier d'autres éléments.

Par exemple, un lecteur de trames, permettant de lire et décoder les informations transmises, peut être connecté au deuxième bus de communication B2. Un opérateur peut ainsi se connecter temporairement au deuxième bus de communication B2 afin de lire les grandeurs de mesure émises par une ou plusieurs des unités d'acquisition 3-A,3-B,3-C.

Le deuxième bus de communication B2 est configuré pour établir une communication notamment entre l'unité centrale 1 et chaque unité d'acquisition 3-A,3-B,3-C de l'ensemble de cellules électriques 10-A,10-B,10-C.

Le signal de mesure émis par chaque unité d'acquisition 3-A, 3-B,3-C vers l'unité centrale 1 est un signal numérique.

Chaque unité d'acquisition 3-A,3-B,3-C réalise l'acquisition du signal de mesure de chacun des capteurs de mesure du deuxième ensemble de capteurs 6-A,6-B,6-C. Lorsque ce signal est un signal analogique, l'unité d'acquisition réalise la conversion analogique/numérique du signal de mesure, et émet le signal converti sur le deuxième bus de communication B2.

Comme schématisé sur la figure 1, chaque cellule 10-A,10-B,10-C comprend respectivement un conducteur électrique 7-A,7-B,7-C correspondant à une phase L1 d'un réseau électrique de moyenne tension, et le premier ensemble de capteurs 5-A,5-B,5-C de chaque cellule électrique 10-A,10-B,10-C comprend au moins un capteur parmi un capteur de courant et un capteur de tension.

Le capteur de courant est configuré pour déterminer l'intensité du courant électrique circulant dans le conducteur électrique 7-A,7-B,7-C.
Le capteur de tension est configuré pour déterminer la tension électrique du conducteur électrique 7-A,7-B,7-C.

La surveillance de l'intensité du courant circulant dans le conducteur électrique d'une cellule donnée, et/ou de la tension électrique, permet de déterminer une anomalie de fonctionnement de la partie de réseau électrique qui est alimentée par cette cellule.

Selon un exemple de réalisation, le premier ensemble de capteurs 5-A,5-B,5-C de chaque cellule électrique 10-A,10-B,10-C comprend un capteur de courant et un capteur de tension.
Autrement dit, l'intensité du courant électrique et la tension sont toutes les deux mesurées afin de surveiller le courant dans la cellule.

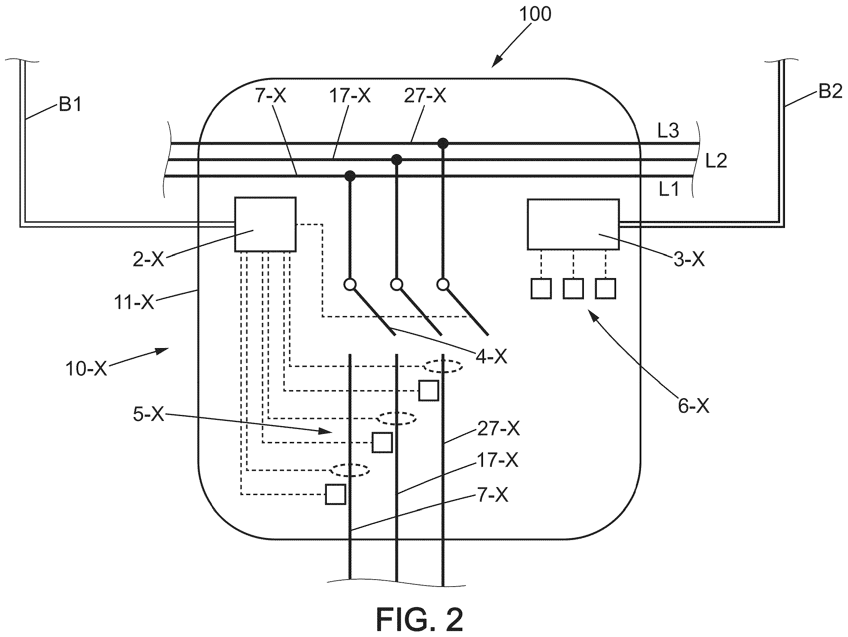

La figure 2 représente schématiquement une cellule électrique prise isolément. Cette cellule est désignée par le signe 10-X. Cette désignation est générique pour désigner n'importe laquelle des cellules 10-A,10-B,10-C, 10-D,10-E illustrées sur la figure 1. Autrement dit, l'indice 'X' peut désigner n'importe lequel des signes 'A', 'B', 'C', 'D', 'E' de la figure 1.

Les conducteurs électriques correspondant aux deux autres phases L2, L3 du réseau triphasé sont équipés d'une manière similaire au conducteur électrique correspondant à la première phase L1.

Ainsi, chaque cellule 10-X comprend respectivement trois conducteurs électriques 7-X,17-X,27-X correspondant respectivement à chacune des phases L1,L2,L3 d'un réseau électrique de moyenne tension.
Le premier ensemble de capteurs 5-A,5-B,5-C de chaque cellule électrique 10-A,10-B,10-C comprend au moins un capteur parmi un capteur d'intensité du courant électrique et un capteur de tension électrique pour chaque phase L1,L2,L3.

Le deuxième ensemble de capteurs 6-A,6-B,6-C comprend au moins un capteur parmi un capteur de température, un capteur de pression, un capteur d'humidité, un capteur de décharge partielle.

Plus généralement, le deuxième ensemble de capteurs 6-A,6-B,6-C d'une cellule 10-A,10-B,10-C comprend tout capteur permettant d'évaluer l'état opérationnel de la cellule correspondante.

On entend par évaluer l'état opérationnel d'une cellule une détermination des conditions dans lesquelles la cellule fonctionne. Cet état opérationnel est distinct de l'état de la branche du réseau alimentée par cette cellule.

Les signaux délivrés par les différents capteurs du deuxième ensemble de capteurs 6-A,6-B,6-C permettent de vérifier que les conditions environnementales dans lesquelles chaque cellule électrique opère restent dans des limites acceptables. Ils permettent aussi de vérifier que les équipements ou composants de chaque cellule ne sont pas dégradés. Ils permettent également de détecter une anomalie de fonctionnement telle qu'une dégradation d'un ou des équipements de chaque cellule. Cette surveillance permet de planifier une éventuelle maintenance.

Chaque cellule 10-X comprend un bâti, non représenté, supportant un ensemble de panneaux délimitant une enceinte 11-X. Les différents équipements de la cellule sont disposés à l'intérieur de l'enceinte 11-X.
Par équipements, on entend notamment les différents capteurs, le dispositif de coupure, l'unité d'interface, l'unité d'acquisition, ainsi que les câbles et connecteurs associés, et les fixations associées.
Un panneau mobile, non schématisé, permet d'ouvrir et refermer l'enceinte 11-X afin de permettre notamment des opérations de maintenance.

Chaque capteur du deuxième ensemble de capteurs 6-A,6-B,6-C est ainsi respectivement disposé à l'intérieur d'une cellule 10-A,10-B,10-C.
Chaque capteur du deuxième ensemble de capteurs 6-A,6-B,6-C est par exemple fixé à un bâti de la cellule 10-A,10-B,10-C.

Un capteur de température permet de mesurer la température à l'intérieur de la cellule 10-X. La mesure de cette température interne d'une cellule 10-X permet de détecter une surchauffe anormale.
Un capteur de pression permet de mesurer la pression régnant à l'intérieur de la cellule, lorsque celle-ci comprend une enceinte étanche pressurisée. Cette mesure de pression permet notamment de détecter une éventuelle fuite de l'enceinte pressurisée de la cellule.
Un capteur d'humidité permet de mesurer le taux d'humidité de l'air, ou du gaz, contenu à l'intérieur de l'enceinte de la cellule. Un taux anormal de vapeur d'eau peut ainsi être détecté.
Un capteur de décharge partielle permet de détecter l'occurrence de décharges partielles dans la cellule, c'est-à-dire d'arc électriques transitoires.

Le premier bus de communication B1 est configuré pour utiliser un premier protocole de communication numérique.
Le premier protocole de communication numérique est par exemple le protocole IEC 61850.
Ce protocole permet la transmission des signaux échantillonnés avec des performances suffisantes pour assurer les fonctions de protection.

Le deuxième bus de communication B2 est configuré pour utiliser un deuxième protocole de communication numérique.
Le deuxième protocole de communication numérique peut être distinct du premier protocole de communication numérique.

Le deuxième protocole de communication numérique est par exemple le protocole Modbus.
D'autres protocoles industriels peuvent aussi être utilisés, notamment les protocoles CAN, CANopen, J1939, LIN, EtherCAT, Ethernet/IP, Profinet.

Le deuxième bus de communication B2 est un bus filaire.

Le deuxième bus de communication B2 a une topologie en bus.

Ainsi, le deuxième bus de communication B2 relie l'unité centrale 1 à l'unité d'acquisition 3-A de la première cellule 10-A. Le deuxième bus de communication B2 relie l'unité d'acquisition 3-A de la première cellule 10-A à l'unité d'acquisition 3-B de la deuxième cellule 10-B.
Pour un ensemble de cellules comprenant N cellules, l'unité d'acquisition d'une cellule de rang k donné compris entre 2 et N-1 est connectée à l'unité d'acquisition de la cellule de rang immédiatement inférieur k-1, ainsi qu'à l'unité d'acquisition de la cellule de rang immédiatement supérieur k+1.
Autrement dit, de la deuxième cellule 10-B à l'avant-dernière unité cellule 10-D, chaque unité d'acquisition est reliée à l'unité d'acquisition de la cellule précédente, ainsi qu'à l'unité d'acquisition de la cellule suivante.

L'unité d'interface 2-X d'une cellule X réalise plusieurs fonctions : l'acquisition des mesures des capteurs 5-X de surveillance du courant électrique, la numérisation si besoin de ces mesures, ainsi que la transmission de ces données à l'unité centrale 1.
De plus, l'unité d'interface 2-X comprend un actionneur, non représenté, permettant de déclencher le dispositif de coupure 4-X de la cellule 10-X.

L'unité d'interface 2-A,2-B,2-C de chaque cellule électrique 10-A,10-B,10-C est configurée pour échantillonner un signal électrique analogique fourni par chaque capteur du premier ensemble de capteurs 5-A,5-B,5-C, et pour transmettre les valeurs échantillonnées à l'unité centrale 1 par le premier bus de communication B1.

Dans le cas où les capteurs utilisés sont des capteurs analogiques, l'unité d'interface réalise l'acquisition du signal analogique puis la conversion analogique/numérique du signal acquis.

Lorsque le premier ensemble de capteurs d'une cellule comprend un capteur de courant et un capteur de tension, l'unité d'interface réalise l'acquisition et la conversion du signal du capteur de courant, ainsi que l'acquisition et la conversion du signal du capteur de tension.

Dans le cas où au moins l'un des capteurs utilisés est un capteur fournissant un signal numérique, l'unité d'interface transmet le signal fourni sans traitement.

Selon un exemple de réalisation du tableau de distribution électrique 100, l'échantillonnage est réalisé de manière synchrone entre les unités d'interface 2-A,2-B,2-C de l'ensemble de cellules électriques 10-A,10-B,10-C.

Autrement dit, l'échantillonnage du signal a lieu au même instant pour l'ensemble des unités d'interface 2-A,2-B,2-C. Après une période d'échantillonnage, un nouvel échantillon est pris pour chaque unité d'interface de l'ensemble d'unités d'interface.

Des algorithmes de surveillance basés sur la comparaison des signaux de différentes cellules peuvent ainsi être mis en œuvre.
En effet, les algorithmes basés sur la cohérence entre les différentes cellules de la valeur d'un signal donné ont généralement besoin que les différents échantillons soient mesurés au même instant.

Les unités d'interface 2-A,2-B,2-C sont ainsi configurées pour échantillonner de façon synchrone les signaux électriques analogiques fournis par les capteurs du premier ensemble de capteurs 5-A,5-B,5-C.

Les unités d'interface 2-A,2-B,2-C sont configurées pour échantillonner les signaux électriques analogiques fournis par les capteurs du premier ensemble de capteurs 5-A,5-B,5-C à une première fréquence prédéterminée.

La première fréquence prédéterminée vaut par exemple 4,8 kHz.

L'unité d'acquisition 3-X d'une cellule X réalise également plusieurs fonctions : l'acquisition des mesures des capteurs du deuxième ensemble de capteurs 6-X, le traitement et leur transmission à l'unité centrale 1.

L'unité d'acquisition 3-A,3-B,3-C de chaque cellule électrique 10-A,10-B,10-C est configurée pour échantillonner un signal électrique analogique fourni par chaque capteur du deuxième ensemble de capteurs 6-A,6-B,6-C, et pour transmettre les valeurs échantillonnées à l'unité centrale 1 par le deuxième bus de communication B2.

Selon un mode de réalisation, l'échantillonnage est réalisé de manière synchrone entre les unités d'acquisition 3-A,3-B de l'ensemble de cellules électriques 10-A,10-B,10-C.

Les unités d'acquisition 3-A,3-B,3-C sont configurées pour échantillonner de façon synchrone les signaux électriques analogiques fournis par les capteurs du deuxième ensemble de capteurs 6-A,6-B,6-C.

Selon un mode de réalisation, les unités d'acquisition 3-A,3-B,3-C sont configurées pour échantillonner les signaux électriques analogiques fournis par les capteurs du deuxième ensemble de capteurs 6-A,6-B,6-C à une deuxième fréquence prédéterminée.
La deuxième fréquence prédéterminée est distincte de la première fréquence prédéterminée.

La deuxième fréquence prédéterminée est choisie en fonction de la dynamique du paramètre physique observé. On entend par dynamique la vitesse de variation maximale du phénomène physique observée.
La température interne de la cellule, la pression à l'intérieur de la cellule ont une dynamique de variation moins rapide que celle du courant, la deuxième fréquence d'échantillonnage peut donc être inférieure à la première fréquence d'échantillonnage.

Les signaux des différents capteurs du deuxième ensemble de capteurs 6-X peuvent aussi être échantillonnés à des fréquences différentes. La fréquence d'échantillonnage de chaque capteur es adaptée à la vitesse de variation maximale de la grandeur physique mesurée par le capteur en question.

L'unité d'acquisition 3-X d'une cellule X réalise l'acquisition des mesures des capteurs 6-X de surveillance des conditions opératoires de la cellule, la numérisation si besoin de ces mesures, ainsi que la transmission des données numériques à l'unité centrale 1.
L'unité d'acquisition 3-X est dépourvue d'actionneur.

L'unité centrale 1 reçoit les informations envoyées par les différentes unités d'interface et unités d'acquisition, et joue le rôle de superviseur du fonctionnement du tableau de distribution électrique 100.
L'unité centrale 1 est disposé à l'extérieur des cellules électriques, et peut être éloignée des cellules électriques.

L'unité centrale 1 reçoit un premier jeu d'informations concernant l'énergie dans chaque des phases électriques de la cellule, provenant des capteurs du premier ensemble de capteurs. L'unité centrale 1 reçoit également un deuxième jeu d'informations concernant les conditions opératoires, provenant des capteurs du deuxième ensemble de capteurs. L'unité centrale exécute des algorithmes de surveillance et de détection de défaut basés sur les jeux d'informations reçus.
Si besoin, l'unité centrale 1 peut commander le disjoncteur de la cellule concernée par un défaut critique détecté, via l'unité d'interface de cette cellule. L'unité centrale 1 peut aussi réaliser d'autres actions, comme émettre des signaux d'alerte.

L'unité centrale 1 est ainsi configurée pour :
- analyser au moins un signal parmi les signaux émis par l'unité d'interface 2-A,2-B,2-C d'une cellule 10-A,10-B,10-C,
- détecter une anomalie du courant électrique fourni par ladite cellule 10-A,10-B,10-C à partir du au moins un signal analysé.

Pour chaque cellule, le signal analysé est par exemple l'intensité du courant électrique.

L'unité centrale 1 est aussi configurée pour :
- analyser le signal émis par l'unité d'acquisition 3-A,3-B,3-C d'une cellule 10-A,10-B,10-C,
- évaluer un état opérationnel de ladite cellule 10-A,10-B,10-C à partir de chacun des signaux analysés.

L'unité centrale 1 est configurée pour :
- détecter une anomalie de fonctionnement correspondant à un court-circuit dans une cellule de l'ensemble de cellules électriques 10-A,10-B,10-C,
- émettre une requête de coupure du courant électrique vers la cellule pour laquelle une anomalie de fonctionnement correspondant à un court-circuit est détectée.

L'anomalie de fonctionnement est dans ce cas une anomalie du courant électrique fourni.
L'unité centrale 1 déclenche la coupure du courant dans une cellule lorsqu'une anomalie de fonctionnement critique, telle qu'un court-circuit, est détectée pour la branche du réseau surveillée par cette cellule. En effet, un tel défaut du réseau doit être traité sans délai pour ne pas risquer une dégradation de tout ou partie des éléments de la branche surveillée.
L'unité centrale 1 assure ainsi un rôle de protection du réseau électrique.

L'unité centrale 1 est aussi configurée pour :
- détecter une anomalie de fonctionnement correspondant à une surchauffe d'une cellule de l'ensemble de cellules électriques 10-A,10-B,10-C,
- émettre un signal d'alerte indiquant la cellule pour laquelle une anomalie de fonctionnement correspondant à une surchauffe est détectée.

Dans le cas d'une anomalie de fonctionnement non-critique, comme une surchauffe modérée, un signal d'alerte est émis, sans toutefois interrompre le fonctionnement de la cellule concernée. L'opérateur du réseau électrique peut ainsi analyser le fonctionnement du système et prendre les mesures correctives adéquates.

Le signal d'alerte peut être un signal visuel sur un écran de contrôle, ou un signal sonore, ou un message envoyé sur un équipement portable utilisé par l'opérateur du réseau électrique.

L'architecture proposé pour le tableau de distribution électrique 100 permet une standardisation des cellules.

Le premier ensemble de capteurs 5-X d'une cellule de l'ensemble de cellules 10-A,10-B,10-C peut être identique au premier ensemble de capteurs des autres cellules de l'ensemble de cellules 10-A,10-B,10-C.

Les capteurs du premier ensemble de capteurs sont du même modèle sur chaque cellule. Par exemple, le capteur de courant est le même pour toutes les cellules. De même, le capteur de tension peut être du même modèle pour toutes les cellules. L'équipement des cellules peut ainsi être au moins partiellement standardisé.

De la même manière, le deuxième ensemble de capteurs 6-X d'une cellule de l'ensemble de cellules 10-A,10-B,10-C peut être identique au deuxième ensemble de capteurs des autres cellules de l'ensemble de cellules 10-A,10-B,10-C.

Les deuxièmes ensembles de capteurs sont identiques. En d'autres termes, les capteurs du deuxième ensemble de capteurs sont du même modèle sur chaque cellule.
Comme précédemment, l'équipement des cellules peut ainsi être au moins partiellement standardisé.

La standardisation peut s'appliquer aussi aux unités d'interface, ainsi qu'aux unités d'acquisition.

De préférence, l'unité d'interface 2-X d'une cellule de l'ensemble de cellules 10-A,10-B,10-C est identique à l'unité d'interface des autres cellules de l'ensemble de cellules 10-A,10-B,10-C.

Les unités d'interface de l'ensemble de cellules électriques 10-A,10-B sont ainsi identiques.

De préférence encore, l'unité d'acquisition 3-A,3-B,3-C d'une cellule de l'ensemble de cellules 10-A,10-B,10-C est identique à l'unité d'acquisition des autres cellules de l'ensemble de cellules 10-A,10-B,10-C.

Les unités d'acquisition 3-A,3-B,3-C de l'ensemble de cellules électriques 10-A,10-B,10-C sont identiques.

Comme précédemment, l'équipement des cellules peut ainsi être au moins partiellement standardisé.

Selon un exemple de réalisation du tableau de distribution électrique 100, toutes les cellules de l'ensemble de cellules électriques 10-A,10-B,10-C sont identiques.

On entend que toutes les cellules sont matériellement identiques. Autrement dit, les cellules peuvent être complètement standardisées, aussi bien pour leur partie mécanique que pour leur équipement électrique.
La réalisation des cellules est ainsi facilitée. De plus, la mise en œuvre et la modification d'un réseau électrique est ainsi facilitée.

La standardisation peut s'appliquer également aux logiciels employés.

L'unité d'interface d'une cellule peut avoir le même logiciel que l'unité d'interface des autres cellules de l'ensemble de cellules. Le logiciel peut ainsi également être standardisé. Le paramétrage du logiciel de l'unité d'interface peut éventuellement différer d'une cellule à une autre.

De la même manière, l'unité d'acquisition d'une cellule peut avoir le même logiciel que l'unité d'acquisition des autres cellules de l'ensemble de cellules.
De même, le paramétrage du logiciel de l'unité d'acquisition peut différer d'une cellule à une autre.

## Revendications

1. Tableau de distribution électrique (100) de moyenne tension, comprenant :
- un ensemble de cellules électriques (10-A,10-B,10-C), chaque cellule électrique (10-A,10-B,10-C) étant configurée pour fournir un courant électrique,
- un premier bus de communication (B1),
- un deuxième bus de communication (B2) distinct du premier bus de communication (B1),
- une unité centrale (1) connectée au premier bus de communication (B1) et au deuxième bus de communication (B2),
chaque cellule électrique (10-A,10-B,10-C) comportant respectivement :
- un dispositif de coupure (4-A,4-B,4-C) apte à interrompre le courant électrique fourni par la cellule électrique (10-A,10-B,10-C),
- un premier ensemble de capteurs (5-A,5-B,5-C), chaque capteur du premier ensemble de capteurs (5-A,5-B,5-C) étant configuré pour mesurer une première catégorie de paramètres physiques représentatifs d'une énergie électrique fournie par la cellule (10-A,10-B,10-C),
- une unité d'interface (2-A,2-B,2-C) connectée au premier bus de communication (B1), l'unité d'interface (2-A,2-B,2-C) étant configurée pour émettre vers l'unité centrale (1) un signal de mesure de chaque capteur du premier ensemble de capteurs (5-A, 5-B,5-C),
- un deuxième ensemble de capteurs (6-A,6-B,6-C), chaque capteur du deuxième ensemble de capteurs (6-A,6-B,6-C) étant configuré pour mesurer une deuxième catégorie de paramètres physiques représentatifs de conditions de fonctionnement de la cellule (10-A,10-B,10-C),
- une unité d'acquisition (3-A,3-B,3-C) connectée au deuxième bus de communication (B2), l'unité d'acquisition (3-A,3-B,3-C) étant configurée pour émettre vers l'unité centrale (1) un signal de mesure de chaque capteur du deuxième ensemble de capteurs (6-A,6-B,6-C),
dans lequel l'unité centrale (1) est configurée pour émettre une requête de coupure du courant électrique vers une cellule de l'ensemble de cellules électriques (10-A,10B,10-C) à partir d'au moins un signal parmi les signaux émis par l'unité d'interface (2-A,2-B,2-C) de ladite cellule (10-A,10-B,10-C),
dans lequel l'unité d'interface (2-A,2-B,2-C) de chaque cellule (10-A,10-B,10-C) est configurée pour commander respectivement le dispositif de coupure (4-A,4-B,4-C) de ladite cellule (10-A,10-B,10-C) sur réception de la requête de coupure du courant électrique émise par l'unité centrale (1),
et dans lequel l'unité centrale (1) est configurée pour évaluer un état opérationnel du tableau de distribution électrique (100) à partir d'au moins un signal parmi les signaux de mesure respectivement émis par chaque unité d'acquisition (3-A,3-B,3-C).

2. Tableau de distribution électrique (100) selon la revendication 1, dans lequel le premier bus de communication (B1) est un bus dédié à la communication entre l'unité centrale (1) et chaque unité d'interface (2-A,2-B,2-C) de l'ensemble de cellules électriques (10-A,10-B,10-C).

3. Tableau de distribution électrique (100) selon la revendication 1 ou 2, dans lequel le deuxième bus de communication (B2) relie un deuxième ensemble d'éléments, le deuxième ensemble d'éléments comprenant l'unité centrale (1) et chaque unité d'acquisition (3-A,3-B,3-C) de l'ensemble de cellules électriques (10-A,10-B,10-C).

4. Tableau de distribution électrique (100) selon l'une des revendications précédentes, dans lequel chaque cellule (10-A,10-B,10-C) comprend respectivement un conducteur électrique (7-A,7-B,7-C) correspondant à une phase (L1) d'un réseau électrique de moyenne tension, et dans lequel le premier ensemble de capteurs (5-A,5-B,5-C) de chaque cellule électrique (10-A,10-B,10-C) comprend au moins un capteur parmi un capteur de courant et un capteur de tension.

5. Tableau de distribution électrique (100) selon l'une des revendications précédentes, dans lequel le deuxième ensemble de capteurs (6-A,6-B,6-C) comprend au moins un capteur parmi un capteur de température, un capteur de pression, un capteur d'humidité, un capteur de décharge partielle.

6. Tableau de distribution électrique (100) selon l'une des revendications précédentes, dans lequel le premier bus de communication (B1) est configuré pour utiliser un premier protocole de communication numérique,
et dans lequel le deuxième bus de communication (B2) est configuré pour utiliser un deuxième protocole de communication numérique.

7. Tableau de distribution électrique (100) selon l'une des revendications précédentes, dans lequel l'unité d'interface (2-A,2-B,2-C) de chaque cellule électrique (10-A,10-B,10-C) est configurée pour échantillonner un signal électrique analogique fourni par chaque capteur du premier ensemble de capteurs (5-A,5-B,5-C), et pour transmettre les valeurs échantillonnées à l'unité centrale (1) par le premier bus de communication (B1),
et dans lequel l'échantillonnage est réalisé de manière synchrone entre les unités d'interface (2-A,2-B,2-C) de l'ensemble de cellules électriques (10-A,10-B,10-C).

8. Tableau de distribution électrique (100) selon l'une des revendications précédentes, dans lequel l'unité d'acquisition (3-A,3-B,3-C) de chaque cellule électrique (10-A,10-B,10-C) est configurée pour échantillonner un signal électrique analogique fourni par chaque capteur du deuxième ensemble de capteurs (6-A,6-B,6-C), et pour transmettre les valeurs échantillonnées à l'unité centrale (1) par le deuxième bus de communication (B2).

9. Tableau de distribution électrique (100) selon l'une des revendications 1 à 8, dans lequel l'unité centrale (1) est configurée pour :
- analyser au moins un signal parmi les signaux émis par l'unité d'interface (2-A,2-B,2-C) d'une cellule (10-A,10-B,10-C),
- détecter une anomalie du courant électrique fourni par ladite cellule (10-A,10-B,10-C) à partir du au moins un signal analysé.

10. Tableau de distribution électrique (100) selon l'une des revendications 1 à 8, dans lequel l'unité centrale (1) est configurée pour :
- analyser le signal émis par l'unité d'acquisition (3-A,3-B,3-C) d'une cellule (10-A,10-B,10-C),
- évaluer un état opérationnel de ladite cellule (10-A,10-B,10-C) à partir de chacun des signaux analysés.

11. Tableau de distribution électrique (100) selon la revendication 9 ou 10, dans lequel l'unité centrale (1) est configurée pour :
- détecter une anomalie de fonctionnement correspondant à un court-circuit dans une cellule de l'ensemble de cellules électriques (10-A,10-B,10-C),
- émettre une requête de coupure du courant électrique vers la cellule pour laquelle une anomalie de fonctionnement correspondant à un court-circuit est détectée.

12. Tableau de distribution électrique (100) selon l'une des revendications 9 à 11, dans lequel l'unité centrale (1) est configurée pour :
- détecter une anomalie de fonctionnement correspondant à une surchauffe d'une cellule de l'ensemble de cellules électriques (10-A,10-B,10-C),
- émettre un signal d'alerte indiquant la cellule pour laquelle une anomalie de fonctionnement correspondant à une surchauffe est détectée.

13. Tableau de distribution électrique (100) selon l'une des revendications précédentes, dans lequel toutes les cellules de l'ensemble de cellules électriques (10-A,10-B,10-C) sont identiques.
